# FASCICULE DE BREVET EUROPEEN

(11) **EP 1 044 084 B1**
(45) Date de publication et mention de la délivrance du brevet: **12.06.2002**
(21) Numéro de dépôt: 99907720.9
(22) Date de dépôt: 16.03.1999
(51) Int. Cl.: B26D 1/00, B26D 5/00

(54) **MACHINE ET PROCEDE POUR REDUIRE LES PNEUMATIQUES USAGES EN PETITS ELEMENTS**
VERFAHREN SOWIE VORRICHTUNG ZUR ZERKLEINERUNG VON ALTREIFEN
MACHINE AND METHOD FOR REDUCING USED TYRES INTO SMALL ELEMENTS

(30) Priorité: 17.03.1998 FR 9803499
(43) Date de publication de la demande: 18.10.2000
(73) Titulaire: Papachristou, Dimitri, 30800 Saint-Gilles (FR)
(72) Inventeur: Papachristou, Dimitri, 30800 Saint-Gilles (FR)
(74) Mandataire: Roman, Michel
(86) Numéro de dépôt international: FR9900587
(87) Numéro de publication internationale: WO9947316

(56) Documents cités:
- AT-B- 367 686
- DE-A- 2 531 923
- GB-A- 522 558
- NL-C- 130 885
- US-A- 4 967 626

## Description

La présente invention a pour objet une machine pour réduire les pneumatiques usagés en petits éléments conformément au préambule de la revendication 1 (voir par exemple, US-A-4 967 626) et un procédé pour réduire les pneumatiques usagés en petits éléments mettant en oeuvre cette machine.

Elle a pour but de faciliter la manutention, le stockage et le traitement des pneumatiques hors d'usage des véhicules routiers.

Les pneus devenus inutilisables représentent un volume considérable de matériau non biodégradable à éliminer.

Plusieurs moyens sont actuellement mis en oeuvre pour y parvenir. Les pneus sont généralement réduits en éléments et utilisés comme combustible dans des chaudières spécialement aménagées.

La réduction des pneus est traditionnellement effectuée en les découpant par broyage en gros morceaux de taille inégale, encombrants et difficile à manipuler, cette opération produisant de surcroît de la limaille de fer nuisant à la combustion lorsque les déchets obtenus sont brûlés, comme c'est couramment le cas dans les fours de cimenteries, par exemple.

Le brevet N° US 4 967 626 fait état d'une machine destinée à couper une carcasse de pneu en petits éléments comprenant une presse à deux matrices coupantes entre lesquelles passent les pneumatiques.

Le brevet N° DE 2 531 923 décrit une machine pour réduire les pneumatiques usagés en morceaux comprenant un détalonneur et un système de coupe radial permettant de transformer les pneumatiques en petits segments.

Le dispositif selon la présente invention a pour objectif de réduire les pneumatiques en formes de faibles dimensions d'encombrement réduit, beaucoup plus faciles à stocker à manipuler et à transporter que les éléments connus à ce jour. Quelles que soient les formes (rondes, triangulaires ou autres) produites par la machine, elles sont embouties de façon nettes, sans production de limaille de fer.

La machine est constituée d'un ensemble formé d'un détalonneur, d'un système d'alimentation assurant le transfet des pneumatiques, et d'une presse comportant un support mobile à poinçons multiples et deux plaques matrices horizontales entre lesquelles le système d'alimentation fait passer le pneu préalablement débarrassé de ses talons par le détalonneur et ouvert grâce à une coupe transversale pour pouvoir le disposer à plat, les plaques matrices comportant chacune une série de perforations correspondant aux poinçons.

Sur les dessins schématiques annexés, donnés à titre d'exemples non limitatifs de formes de réalisation de l'objet de l'invention:
la figure 1 représente, vus de côté, les éléments constitutifs de la machine utilisée pour découper les pneumatiques,
la figure 2 illustre l'élimination des talons d'un pneu,
la figure 3 représente en perspective un pneu coupé avant son passage dans la presse,
La figure 4 représente quelques dispositions possibles des perforations des matrices,
les figures 5 et 6 représentent des variante du système d'alimentation de la presse,
les figures 7 et 8 sont des vues agrandies du détail D de la figure 1, montrant les éléments actifs du détalonneur respectivement de côté et de dessus
et la figure 9 représente, dans les mêmes conditions que la figure 5, le détalonneur en position de travail.

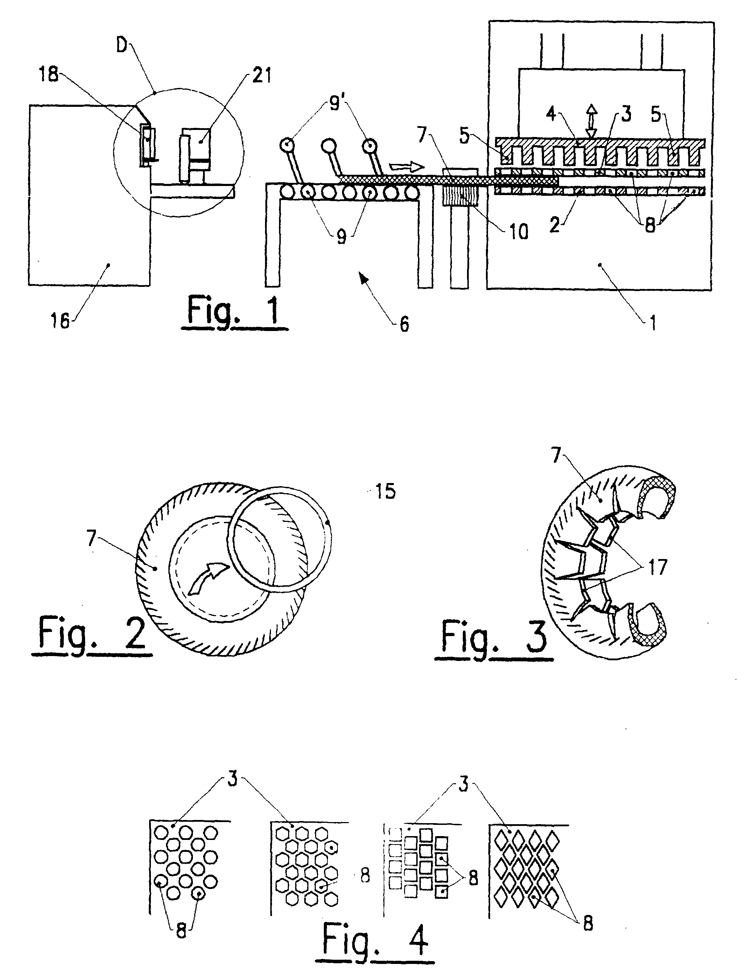

Le dispositif représenté sur la figure 1 comporte une presse 1 de type connu équipée de deux plaques matrices 2, 3 horizontales superposées, d'un support mobile 4 comportant une série de poinçons 5 et d'un système d'alimentation 6 destiné à introduire les pneus 7 à réduire dans la machine.

La plaque matrice inférieure 2 est fixe et solidaire du bâti de la presse 1, alors que la plaque matrice supérieure 3 peut être déplacée verticalement afin de pouvoir adapter le dispositif à l'épaisseur des pneus 7 à traiter.

Le support mobile 4 effectue des battements continus consistant en mouvements alternatifs verticaux, de manière à ce que les poinçons 5 traversent périodiquement les perforations 8 des plaques matrices 2, 3.

Les poinçons 5 sont disposés en quinconce. Leur forme peut être circulaire, triangulaire ou quelconque, et ils peuvent être tous identiques ou non. Les perforations 8 des deux plaques matrices ont la même forme que les poinçons et sont alignées sur eux, l'ensemble étant déterminé pour obtenir une découpe nette sans bavures et sans limaille de fer.

Le système d'alimentation 6 comporte deux séries superposée de rouleaux 9, 9'. La série inférieure 9 forme une table à rouleaux et la série supérieure 9' est mobile et a pour fonction de happer, d'écraser et de faire avancer le pneu 7 jusqu'à l'entrée d'une cellule électronique 10 qui détermine le nombre de battements par minute de la presse 1, ainsi que la force qu'elle devra développer.

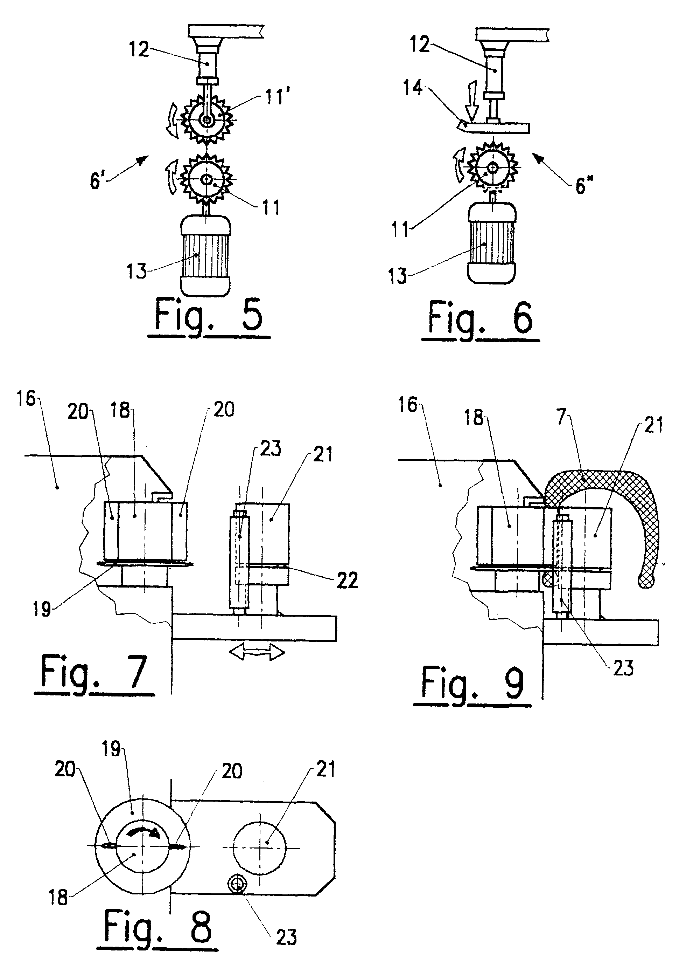

Selon une première variante, le système d'alimentation 6' pourra être constitué de deux rouleaux à surface périphérique striée 11, 11' superposés et d'axes parallèles dont l'un est entraîné par un moteur 13, le rouleau supérieur 11' étant mobile verticalement et appliqué sur le pneu 7 par un vérin 12 (figure 5).

Selon une seconde variante, le système d'alimentation 6" est composé d'une roue ou d'un rouleau strié(e) 11 entraîné(e) par un moteur 13, et d'un plateau pressseur 14 actionné par un vérin 12 et dont le rôle est d'appuyer le pneu 7 contre la roue ou le tambour et de l'étaler pour qu'il puisse pénétrer entre les deux plaques matrices 2, 3 (figure 6).

Les pneus 7 à traiter sont tout d'abord débarrassés de leurs talons 15 au moyen d'un détalonneur 16, puis coupés transversalement en un point de leur périphérie de manière à pouvoir être applatis en écartant leurs bords internes 17 (figure 3), et finalement introduits dans le système d'alimentation 6 qui les insère entre les deux plaques matrices 2, 3 pour être découpés par la presse 1.

Le détalonneur 16 est un appareil assurant simultanément deux fonctions. En effet, non seulement il sépare les talons 15 du pneu 7, mais effectue en même temps une série de fentes radiales sur les flans du pneu de manière à permettre de l'applatir aisément pour le passer dans la presse 1.

Cet appareil comporte un tambour 18 motorisé à axe vertical comportant à sa base un couteau 19 circulaire destiné à découper les talons, et des lames latérales 20 verticales disposées de façon à fendre les flancs du pneu 7 à intervalles réguliers. Un rouleau 21 mobile horizontalement et d'axe parallèle à celui du tambour 18 permet d'appliquer les flancs du pneu contre le tambour 18. Ce rouleau est pourvu d'une fente circulaire 22 dans laquelle s'engage le couteau 19 lorsque l'appareil est en position de travail (figure 9). L'ensemble est complété par un galet cylindrique 23 vertical tournant disposé à proximité du rouleau (21) et destiné à empêcher le pneu d'être retenu dans la fente 22.

En particulier pour le traitement des pneumatiques de poids lourds, le détalonneur 16, le dispositif de coupe transversale des pneus et le système d'alimentation 6 seront avantageusement logés dans un tunnel entièrement automatisé.

Le système d'alimentation 6 et la presse 1 peuvent être dimensionnés pour permettre le passage de plusieurs pneus en parallèle, côte à côte, afin d'augmenter les cadences de production.

Le rythme de fonctionnement de la machine sera avantageusement de 40 à 120 battements par minute du support mobile 4 portant les poinçons 5.

Les formes obtenues par le procédé décrit peuvent être utilisées pour de nombreux usages industriels, et en particulier comme combustible, ou comme constituant de revêtements routiers ou de bétons permettant de réaliser des murs anti-bruit ou des éléments isolants pour la construction de bâtiments.

Le positionnement des divers éléments constitutifs donne à l'objet de l'invention un maximum d'effets utiles qui n'avaient pas été, à ce jour, obtenus par des dispositifs similaires.

## Revendications

1. Machine pour réduire les pneumatiques (7) usagés en petits éléments, destiné à faciliter la manutention, le stockage et le traitement des pneumatiques de véhicules routiers comportant une presse (1) équipée d'un support mobile (4) à poinçons (5) multiples et de deux plaques matrices horizontales (2, 3) à perforations (8) entre lesquelles passe les pneumatiques (7), ainsi qu'un système d'alimentation (6, 6', 6") assurant le transfert des pneumatiques (7) vers la presse (1),
**caractérisée en ce qu'**elle comprend aussi un détalonneur (16) apte à débarrasser lesdits pneumatiques (7) de leurs talons (15) en pratiquant simultanément des fentes radiales dans leurs flancs pour permettre de les applatir aisément avec un dispositif de coupe transversale des pneumatiques (7), ledit détalonneur (16) comportant d'une part un tambour (18) motorisé à axe vertical équipé à sa base d'un couteau (19) circulaire destiné à découper les talons (15), et de lames latérales (20) verticales disposées de façon à fendre les flancs des pneumatiques (7) à intervalles réguliers et, d'autre part, un rouleau (21) mobile horizontalement et d'axe parallèle à celui du tambour (18) permettant d'appliquer les flancs desdits pneumatiques (7) contre ledit tambour (18).

2. Machine selon la revendication 1, se caractérisant par le fait que le rouleau (21) est pourvu d'une fente circulaire (22) dans laquelle s'engage le couteau (19) lorsque le détalonneur (16) est en position de travail.

3. Machine selon la revendication 2, se caractérisant par le fait que le détalonneur (16) est équipé d'un galet cylindrique (23) vertical tournant disposé à proximité du rouleau (21) et destiné à empêcher le pneu (7) d'être retenu dans la fente (22) dudit rouleau.

4. Machine selon l'une quelconque des revendications précédentes, se caractérisant par le fait que le système d'alimentation (6) est constitué de deux séries (9, 9') de rouleaux, une série inférieure (9) formant une table à rouleaux et une série supérieure (9') mobile dont la fonction est de happer, d'écraser et de faire avancer le pneu (7) jusqu'à l'entrée d'une cellule électronique (10) qui détermine le nombre de battements par minute de la presse (1), ainsi que la force qu'elle devra développer.

5. Machine selon l'une quelconque des revendications 1 à 3, se caractérisant par le fait que le système d'alimentation (6') est constitué de deux rouleaux striés (11, 11') superposés et d'axes parallèles, dont l'un est entraîné par un moteur (13), le rouleau supérieur étant mobile verticalement et appliqué sur les pneumatiques (7) par un vérin (12).

6. Machine selon l'une quelconque des revendications 1 à 3, se caractérisant par le fait que le système d'alimentation (6") est constitué d'une ou plusieurs roues ou d'un rouleau à surface périphérique striée (11) entraîné/es) par un moteur (13), et d'un plateau presseur (14) appuyant les pneumatiques (7) contre les dites roues ou ledit tambour (18).

7. Machine selon l'une quelconque des revendications précédentes, se caractérisant par le fait que la plaque matrice inférieure (2) est fixe et solidaire du bâti de la presse (1), et que la plaque matrice supérieure (3) peut être déplacée verticalement pour adapter le dispositif à l'épaisseur des pneumatiques (7) à traiter.

8. Machine selon l'une quelconque des revendications précédentes, se caractérisant par le fait que la presse (1) et le système d'alimentation (6, 6', 6") sont dimensionnés pour permettre le passage de plusieurs pneumatiques (7) en parallèle, côte à côte.

9. Machine selon la revendication 8, se caractérisant par le fait que l'élément mobile (4) portant les poinçons (5) effectue entre 40 et 120 battements par minute.

10. Machine selon l'une quelconque des revendications précédentes, se caractérisant par le fait qu'elle comprend aussi un tunnel entièrement automatisé, et le détalonneur (16), le dispositif de coupe transversale des pneus et le système d'alimentation (6) sont disposés dans ce tunnel automatisé.

11. Procédé pour réduire les pneumatiques usagés en petits éléments, destiné à faciliter la manutention, le stockage et le traitement des pneumatiques de véhicules routiers, et mettant en oeuvre la machine selon l'une des revendications précédentes,
**caractérisé en ce que** les pneumatiques (7) à traiter sont tout d'abord débarrassés de leurs talons (13) et que leurs flancs sont fendus radialement à intervalles réguliers au moyen du couteau (19) du détalonneur (16), puis coupés transversalement à l'aide des lames (20) du détalonneur (16) en un point de leur périphérie de manière à pouvoir être aplatis et introduits dans le système d'alimentation (6, 6', 6") qui les insère entre deux plaques matrices (2, 3) pour être découpés en petites formes par les poinçons (5) portés par l'élément mobile (4) de la presse (1).

## Patentansprüche

1. Maschine zur Zerkleinerung von Altreifen (7) in kleine Elemente, zur Erleichterung der Handhabung, der Lagerung und der Verarbeitung von Straßenfahrzeugreifen, bestehend aus einer Presse (1) mit einer mobilen Platte (4), die mehrere Stempel (5) aufweist und zwei horizontalen, mit Löchern (8) versehen Matrizen (2, 3), durch welche die Reifen (7) gepresst werden sowie einem Zufuhrsystem (6, 6', 6"), das die Reifen (7) in die Presse (1) transportiert,
**gekennzeichnet dadurch, dass** sie darüber hinaus einen Wulstabschneider (16) besitzt, der in der Lage ist, von den besagten Reifen (7) den Wulst (15) zu entfemen, indem gleichzeitig radiale Schnitte in die Flanken eingebracht werden, damit sich die Reifen (7) von einer querliegenden Schneidevorrichtung leicht zusammendrücken lassen, wobei der besagte Wulstabschneider (16) einerseits eine motorisierte Trommel (18) mit senkrechter Welle aufweist, an deren unterem Ende ein scheibenförmiges Messer (19) sitzt, mit dem die Wulste (15) abgeschnitten werden, und außerdem senkrecht stehende, seitliche Schneiden (20), die so angeordnet sind, dass die Flanken der Reifen (7) in regelmäßigen Abständen eingeschnitten werden, sowie eine Walze (21), die in horizontaler Ebene beweglich ist und deren Achse zur Trommelwelle (18) parallel ist, um die Flanken der besagten Reifen (7) gegen die Trommel (18) zu pressen.

2. Maschine nach Anspruch 1, **gekennzeichnet dadurch, dass** die Walze (21) mit einem kreisförmigen Spalt (22) versehen ist, in den ein Messer (19) eingreift, wenn der Wulstabschneider (16) in der Arbeitsstellung ist.

3. Maschine nach Anspruch 2, **gekennzeichnet dadurch, dass** der Wulstabschneider (16) ein senkrecht stehende, drehbare, zylindrische Rolle (23) besitzt, die in der Nähe der Walze (21) angeordnet ist und den Reifen (7) daran hindern soll, von dem Spalt (22) der besagten Walze zurückgehalten zu werden.

4. Maschine nach einem der vorstehenden Ansprüche, **gekennzeichnet dadurch, dass** das Zuführsystem (6) aus zwei Reihen (9, 9') von Walzen besteht, einer unteren Reihe (9), die einen Rollentisch bilden, und einer oberen Reihe (9'), die beweglich ist und deren Aufgabe darin besteht, den Reifen (7) zu greifen, ihn zusammenzudrücken und bis zum Eingang einer elektronischen Zelle (10) vorwärts zu transportieren, wo die Anzahl der Schläge pro Minute der Presse (1) und die Kraft, welche sie entwickeln soll, ermittelt wird.

5. Maschine nach einem der vorstehenden Ansprüche 1 bis 3, **gekennzeichnet dadurch, dass** das Zuführsystem (6') aus zwei gerieften Walzen (11, 11') besteht, die übereinander liegen und deren Achsen parallel sind, von denen eine von einem Motor angetrieben (13) wird, wobei die obere Walze in senkrechter Richtung beweglich ist und von einem Stellelement (12) auf die Reifen (7) gedrückt wird.

6. Maschine nach einem der vorstehenden Ansprüche 1 bis 3, **gekennzeichnet dadurch, dass** das Zuführsystem (6") aus einem oder mehreren Rädem oder einer Walze mit geriefter Oberfläche (11) besteht, die von einem Motor (13) angetrieben sind, sowie von einer Druckplatte (14), welche die Reifen (7) gegen die genannten Räder oder die Walze (18) presst.

7. Maschine nach einem der vorstehenden Ansprüche, **gekennzeichnet dadurch, dass** die untere Matrize (2) mit dem Pressengestell (1) eine feste Einheit bildet und die obere Matrize (3) in senkrechter Richtung verfahren werden kann, um die Vorrichtung auf die Dicke der zu verarbeitenden Reifen (7) einzustellen.

8. Maschine nach einem der vorstehenden Ansprüche, **gekennzeichnet dadurch, dass** die Presse (1) und das Zuführsystem (6, 6', 6") so ausgelegt sind, dass mehrere Reifen (7) parallel, nebeneinander passieren können.

9. Maschine nach Anspruch 8, **gekennzeichnet dadurch, dass** das bewegliche Element (4) mit den Stempeln (5) 40 bis 120 Schläge pro Minute ausführt.

10. Maschine nach einem der vorstehenden Ansprüche, **gekennzeichnet dadurch, dass** sie weiterhin einen vollautomatischen Tunnel besitzt und der Wulstabschneider (16), die querliegende Schneidevorrichtung der Reifen und das Zuführsystem (6) in diesem automatischen Tunnel angeordnet sind.

11. Verfahren zum Zerkleinern von Altreifen in kleine Elemente, bestimmt zur Erleichterung der Handhabung, der Lagerung und der Weiterverarbeitung von Straßenfahrzeugreifen unter Einsatz der Maschine gemäß einem der vorstehenden Ansprüche,
**gekennzeichnet dadurch, dass** die zu verarbeitenden Reifen (7) zunächst von ihren Wülsten (13) befreit werden, dass die Flanken in regelmäßigen Abständen mit Hilfe des Messers (19) des Wulstabschneiders (16) radial eingeschnitten werden und anschließend mit den Schneiden (20) des Wulstabschneiders (16) an einem Punkt auf ihrem Umfang in Querrichtung geschnitten werden, so dass sie zusammengedrückt und in das Zuführsystem (6, 6', 6") eingeführt werden können, das sie zwischen zwei plattenförmige Matrizen (2, 3) einlegt, damit sie von den Stempeln (5) des beweglichen Elements (4) der Presse (1) in kleine Formen zerschnitten werden.

## Claims

1. Machine for reducing worn tires (7) into small pieces, intended to facilitate the handling, storage and treatment of road vehicle tires comprising a press (1) equipped with a mobile support (4) with multiple punches (5) and two horizontal retainer plates (2, 3) with perforations (8) between which pass the tires (7), as well as a feeding system (6, 6 ', 6") ensuring the movement of the tires (7) towards the press (1),
**characterized in that** it also includes a stripping device (16) for removing the tire beads (15) from the aforementioned tires (7) by simultaneously cutting radial slits in their side walls so that they can be easily flattened using a tire (7) cross-cutting device the aforementioned tire bead stripper (16) comprising a motorized drum (18) with vertical axis equipped at its base with a circular cutter (19) intended to cut the tire beads (15), and vertical side blades (20) arranged so as to split the tire side walls (7) at regular intervals and a horizontally mobile roller (21) with axis parallel to that of the drum (18) so that the walls of the said tires (7) can be applied against the aforementioned drum (18).

2. Machine according to claim 1, **characterized by** the fact that the roller (21) is equipped with a circular slit (22) into which the cutter engages (19) when the tire bead stripper (16) is in a working position.

3. Machine according to claim 2, **characterized by** the fact that the tire bead stripper (16) is equipped with a vertically turning cylindrical roller (23) arranged close to the roller (21) and intended to prevent the tire (7) from being retained in the slit (22) of the aforesaid roller.

4. Machine according to any of the preceding claims, **characterized by** the fact that the feeding system (6) consists of two series (9, 9') of rollers, a lower series (9) forming a roller table and a mobile upper series (9') whose function is to seize, crush and advance the tire (7) up to the entrance to an electronic cell (10) which determines the number of beats per minute of the press (1), as well as the force that it will have to develop.

5. Machine according to any of claims 1 to 3, **characterized by** the fact that the feeding system (6') consists of two superimposed striated rollers (11, 11') with parallel axes, one of which is driven by a motor (13), the upper roller being vertically mobile and applied vertically to the tires (7) by a jack (12).

6. Machine according to any of claims 1 to 3, **characterized by** the fact that the feeding system (6") consists of one or more wheels or a roller with striated peripheral surface (11) driven by a motor (13), and of a pressure plate (14) forcing the tires (7) against the said wheels or the aforementioned drum (18).

7. Machine according to any of the preceding claims, **characterized by** the fact that the lower retainer plate (2) is fixed and joined to the frame of press (1), and that the upper retainer plate (3) can be moved vertically to adapt the device to the thickness of the tires (7) to be processed.

8. Machine according to any of the preceding claims, **characterized by** the fact that the press (1) and the feeding system (6, 6 ', 6") are dimensioned to allow the passage of several tires (7) in parallel, side by side.

9. Machine according to claim 8, **characterized by** the fact that the mobile component (4) bearing the punches (5) performs between 40 and 120 beats per minute.

10. Machine according to any of the preceding claims, **characterized by** the fact that it also includes an entirely automated tunnel, and the tire bead stripper (16), the tire cross cutting device and the feeding system (6) are arranged in this automated tunnel.

11. A method for reducing the worn tires into small pieces, intended to facilitate handling, storage and treatment of road vehicle tires, and involving machines according to one of the preceding claims,
**characterized in that** the tires (7) to be processed are first of all stripped of their tire beads (13) and their side walls are radially slit at regular intervals by means of the cutter (19) of the bead stripper (16), then transversely cut using the blades (20) of the bead stripper (16) at a point on their edge so as to be flattened and introduced into the feeding system (6, 6 ', 6") which inserts them between two retaining plates (2, 3) to be cut into small shapes by the punches (5) on the mobile component (4) of the press (1).
